# EUROPÄISCHE PATENTSCHRIFT

(11) **EP 0 977 695 B1**
(45) Veröffentlichungstag und Bekanntmachung des Hinweises auf die Patenterteilung: **20.02.2002**
(21) Anmeldenummer: 98922765.7
(22) Anmeldetag: 23.04.1998
(51) Int. Cl.: B65G 47/08, B65G 57/00, B65B 35/30

(54) **VORRICHTUNG ZUM SAMMELN UND PALETTIEREN VON FLASCHEN**
BOTTLE COLLECTION AND PALETTIZATION
DISPOSITIF DE COLLECTE ET DE PALETTISATION DE BOUTEILLES

(30) Priorität: 23.04.1997 DE 29707324 U
(43) Veröffentlichungstag der Anmeldung: 09.02.2000
(73) Patentinhaber: Certus Maschinenbau GmbH, 86316 Friedberg (DE)
(72) Erfinder: HÖFER, Gunter, D-86931 Prittriching (DE)
(74) Vertreter: Ernicke, Hans-Dieter, Dipl.-Ing.
(86) Internationale Anmeldenummer: EP9802399
(87) Internationale Veröffentlichungsnummer: WO9847795

(56) Entgegenhaltungen:
- EP-A- 0 291 674
- EP-A- 0 312 490
- EP-A- 0 659 664
- WO-A-96/12657
- WO-A-97/11898
- FR-A- 2 697 512

## Beschreibung

Die Erfindung betrifft ein Verfahren und eine Vorrichtung zum Sammeln von leeren Flaschen, insbesondere von Kunststoff-Flaschen und zum Palettieren der Flaschen.

Die EP-0 659 664 A1 zeigt eine solche Sammel- und Palettiervorrichtung für leere Kunststoff-Flaschen. Sie besteht aus einem Palettierer, einer vorgeschalteten Sammeleinrichtung und einer dazwischen angeordneten Transportvorrichtung. Die Sammelvorrichtung ist mit einem Flaschenförderer verbunden und dient zur Übernahme und Lagenbildung der in einer Einzelreihe von dem Flaschenförderer zugeführten Flaschen. Die Sammeleinrichtung hat ein umlaufendes Rangeband, auf das die Flaschen über eine trichterartige Aufweitung des Flaschenförderers geschoben werden, wobei die Flaschen aufgestaut und mit Lückenschluß in Querreihen positioniert werden. Über profilierte Schieber werden die Flaschen auf dem Rangelband zu bereitgestellten Zwischenlagen am Palettierer geschoben und mittels eines Liftes nach und nach zu einer Palette aufgeschichtet. Diese Sammel- und Palettiertechnik ist für schwere und standfeste Flaschen geeignet. Für leichtgewichtige Kunststoff-Flaschen, insbesondere sogenannte PET-Flaschen, ist sie hingegen nicht mit ausreichender Sicherheit verwendbar. Diese Flaschenarten sind wegen ihres niedrigen Gewichtes, wegen elektrostatischer Aufladung und aufgrund der hohen Zuführgeschwindigkeit des Flaschenförderers schwer zu handhaben.

Eine ähnliche Sammel- und Palettiereinrichtung zeigt auch die WO 97/11898. Die Sammeleinrichtung hat hier eine an einen zweiarmigen Flaschenförderer angeschlossene Sortieranlage, die aus einem umlaufenden Förderband und mehreren starren Reihenaufnahmen für die Flaschen besteht. Die vom Flaschenförderer schräg zugeführten Flaschen wandern nach und nach in die Reihenaufnahmen und gelangen am Ende unter Bildung von Flaschenlagen in einen Schieber, der sie auf ein Förderband abschiebt, auf dem sie zu einem Palettierer mit Hubtisch gelangen.

Ferner ist es in der Praxis bekannt, PET-Flaschen über Luftförderer zu transportieren. Diese Förderer sind sehr bauaufwendig, kosten viel Platz und sind teuer. Außerdem ergeben sich erhebliche Hygieneprobleme.

Aus der EP-0 291 674 A1 ist eine Abfüllanlage bekannt, in der Flaschen gereinigt, mit Sirup oder fertigen Getränken befüllt, anschließend mit Kappen verschlossen und dann am Schluß palettiert werden. Vor dem Palettieren werden die einzelnen Flaschen in übliche Flaschenträger eingepackt. Dies sind entweder Kartons oder Kunststoffträger. Mit dieser Verpackung werden dann die befüllten Flaschen zum Palettierer transportiert. Das Verpacken der Flaschen findet erst nach Durchlaufen der Abfüllanlage statt. Innerhalb der Abfüllanlage können die Flaschen gedreht werden.

Es ist Aufgabe der vorliegenden Erfindung, eine Möglichkeit zur betriebssicheren Handhabung auch dieser kritischen Flaschenarten aufzuzeigen.

Die Erfindung löst diese Aufgabe mit den Merkmalen im Verfahrens- und Vorrichtungshauptanspruch. Die Umsetzung der Flaschen auf einen transportablen Zwischenträger bietet gegenüber dem Stand der Technik eine höhere Betriebssicherheit und ermöglicht eine Vielzahl von Funktionsvarianten. Dies gilt vor allem mit Hinblick auf die steigerbare Anlagenkapazität, auf Speichermöglichkeiten und verschiedene interne und externe Trägerkreisläufe. Insbesondere ist es dabei von Vorteil, daß der Zwischenträger während des Umsetzvorgangs stehen kann, was für eine hohe Absetz- und Positioniergenauigkeit sorgt. Die Lagenbildung auf dem Zwischenträger erlaubt eine palettiergerechte Kommissionierung der Flaschen und eine hohe Palettierkapazität.

Für eine hohe Anlagenleistung empfiehlt es sich, die Sammeleinrichtung mit mehreren Zwischenträgern auszurüsten und diese parallel oder im Umlauf zwischen dem Umsetzer und dem Palettierer hin und her zu bewegen. Der Umsetzer hat dadurch keine Unterbrechungen wegen des Zwischenträgertransports. Hierbei ist es auch günstig, auf einem Zwischenträger zwei oder mehr der Palettengröße entsprechende Flaschenlagen anzuordnen. Hierdurch wird die Leistungskapazität weiter erhöht und außerdem eine Puffermöglichkeit bei eventuellen Betriebsstörungen geschaffen.

Die Erfindung sorgt vorzugsweise durch eine im wesentlichen ständige Führung der Flaschen von der Reihenaufnahme am Flaschenförderer bis zum Palettierer dafür, daß die Flaschen stets eine gesicherte Lage haben und auch genau positioniert werden können. Die Flaschen können nicht mehr umfallen und können keine Betriebsstörungen mehr verursachen. Insbesondere ist die erfindungsgemäße Vorrichtung in der Lage, auch Flaschen mit sehr hoher Zuführgeschwindigkeit aufzunehmen, reihenweise überzusetzen, in Lagen anzuordnen und den Palettierer auf dem Zwischenträger zuzuführen. Die erfindungsgemäße Vorrichtung hat dadurch ein sehr hohes Leistungsvermögen.

Von besonderem Vorteil ist, daß auch der Reihenschluß der mit seitlichem Abstand zugeführten Flaschenreihen mit hoher Sicherheit vorgenommen wird. Der Reihenschluß erfolgt beim Übersetzen innerhalb der Greifeinrichtung durch seitlich verstellbare Reihengreifer. Die Flaschen können dann in der letztendlich auf dem Zwischenträger gebildeten Flaschenlage in dichter und für die letztendliche Palettierung geeigneter Lage angeordnet sein. Die erfindungsgemäße Vorrichtung läßt sich dabei auch mit relativ geringem Aufwand auf unterschiedliche Flaschenformate einstellen und umrüsten.

Beim Übersetzen oder Umsetzen der Flaschenreihen kann eine Zwischenspeicherung oder Pufferung über einen Stautisch oder dergleichen stattfinden. Es ist aber auch möglich, die Greifeinrichtung des Umsetzers direkt an den Flaschenförderern bzw. im Flaschenerzeuger zu beladen und die Flaschen unmittelbar in die Reihengreifer zu schieben. Dies ermöglicht eine sehr schnelle Umsetzung und Flaschenlagenbildung.

Für die Flaschenführungen sind in den Unteransprüchen verschiedene Ausführungsformen angegeben. In der Reihenaufnahme sorgen geländerartige und in der Weite verstellbare Flaschenführungen für die optimale seitliche Führung. Zusätzlich kann in den Reihenaufnahmen über bewegliche und gesteuert angetriebene Anschläge eine axiale Führung geschaffen werden, so daß die übernommenen Flaschen in keiner Richtung umfallen können. Hierbei lassen sich über einen geeigneten Versatz der Anschläge die Reihen so axial zueinander verschieben, daß sie mit Reihenversatz auf Lücke zueinander angeordnet sind und sich mit maximaler Dichte in der Flaschenlage packen lassen.

Die bevorzugte Ausführungsform der Flaschenführung am Zwischenträger erlaubt es, die Flaschen eng aneinander anzuschließen und trotzdem eine seitliche Führung zu bieten. Diese Führung erleichtert auch das Einsetzen der Flaschenreihen auf dem Zwischenträger und die Aufnahme der Flaschenlage am Palettierer.

Die Anordnung einer Sammeleinrichtung in unmittelbarer Nähe zu einem Flaschenerzeuger ermöglicht es, die bau- und platzaufwendigen großen Luftförderer einzusparen und mit kurzen Ausgabeförderern auszukommen. Die produzierten Flaschen werden dadurch sehr schnell aufgenommen, umgesetzt und auf ein oder mehreren beweglichen Zwischenträgern zur Weiterbehandlung abgesetzt.

Vorzugsweise ist einem einzelnen Flaschenerzeuger jeweils eine einzelne Sammeleinrichtung mit einer auf die Flaschenerzeugung abgestellten Kapazität zugeordnet. Für Anlagen größerer Kapazität mit mehreren Flaschenerzeugern oder Blaseinrichtungen sind entsprechend mehrere Sammeleinrichtungen vorgesehen. Bei der erfindungsgemäßen Ausgestaltung ist die Fehler- und Ausfallneigung bei der direkten Beladung der Zwischenträger an dem Flaschenerzeuger weitestgehend minimiert. Dies erhöht die Betriebssicherheit der gesamten Anlage. Die Kapazitätsfrage kann durch eine gemeinsame Anbindung der Sammeleinrichtungen auf eine gemeinsame Transporteinrichtung und insbesondere durch Anordnung eines Zwischenlagers für die leeren und/oder beladenen Zwischenträger gelöst werden. Dies ermöglicht insbesondere einen zentralen Palettierer für die gesamte Anlage und eine weitere Verringerung des Ausfallrisikos. Der Zwischenspeicher gleicht einerseits die unterschiedlichen Massendurchsätze der Flaschenerzeuger und des zentralen Palettierers aus und kann andererseits auch als Puffer bei Ausfall oder Störung einzelner Anlagenkomponenten dienen. Vor allem ist aber der Flaschenerzeuger von irgendwelchen Störeinflüssen aus dem Bereich Palettierer oder Fördersystem entkoppelt.

Die erfindungsgemäße Sammel- und Palettiervorrichtung kann zu größeren Flaschenbehandlungsanlagen ausgebaut werden, wobei die einzelnen Vorrichtungen einander überschneiden und ergänzen können. Hierbei lassen sich auch die Anzahl und Zuordnung der Einzelkomponenten, Sammeleinrichtung und Palettierer in geeigneter Weise anpassen.

Die erfindungsgemäße Sammel- und Palettiervorrichtung erfordert trotz hoher Sicherheit einen relativ geringen konstruktiven und steuertechnischen Aufwand. Sie braucht auch wenig Platz und läßt sich in der vorerwähnten Weise beliebig ausbauen. Sie kann auch an bestehenden Anlagen nachgerüstet werden. Die erfindungsgemäße Sammel- und Palettiervorrichtung ist nicht an bestimmte Materialien oder Formate von Flaschen gebunden, sondern kann für beliebige Flaschen eingesetzt werden. Sie erfordert ferner kein besonders ausgebildetes Bedienungspersonal.

In der bevorzugten Ausführungsform zirkulieren die Zwischenträger innerhalb des Flaschenbehandlungssystems und dienen zum lageweisen Transport der leeren Flaschen zwischen Flaschenerzeuger und Palettierer. Darüber hinaus können die Zwischenträger aber auch in einem größeren Kreislauf zirkulieren, indem sie selbst als Palettenbestandteil fungieren und zusammen mit den leeren Flaschen zunächst zur Füllanlage und von dort gegebenenfalls auch weiter über die Handelsverbindungen bis zum Kunden gelangen. Von hier aus können sie gegebenenfalls auch wieder zurück in das Flaschenbehandlungssystem geführt werden. Diese Form von Zwischenträgern mit einer vorzugsweise permanenten Flaschenführung im gesamten Kreislauf erleichtert die verschiedenen Flaschenbehandlungsvorgänge und vereinfacht den Bau- und Maschinenaufwand beim Flaschenerzeuger, Befüller und bei der Logistik.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: ein Flaschenbehandlungssystem mit mehreren Sammel- und Palettieranlagen in einem Anlagenschema,
- Figur 2:: eine vergrößerte Einzeldarstellung einer Sammel- und Palettieranlage gemäß Figur 1,
- Figur 3:: eine Variante des Flaschenbehandlungssystems von Figur 1 und 2 mit einer Sammel- und Palettieranlage an einer Blasmaschine in einem Anlagenschema,
- Figur 4:: die Sammeleinrichtung einer Sammel- und Palettiervorrichtung in einer perspektivischen Darstellung,
- Figur 5:: eine Draufsicht auf eine Variante der Sammeleinrichtung von Figur 4 und
- Figur 6:: eine weitere Variante zu Figur 4 und 5 in vergrößerter Draufsicht.

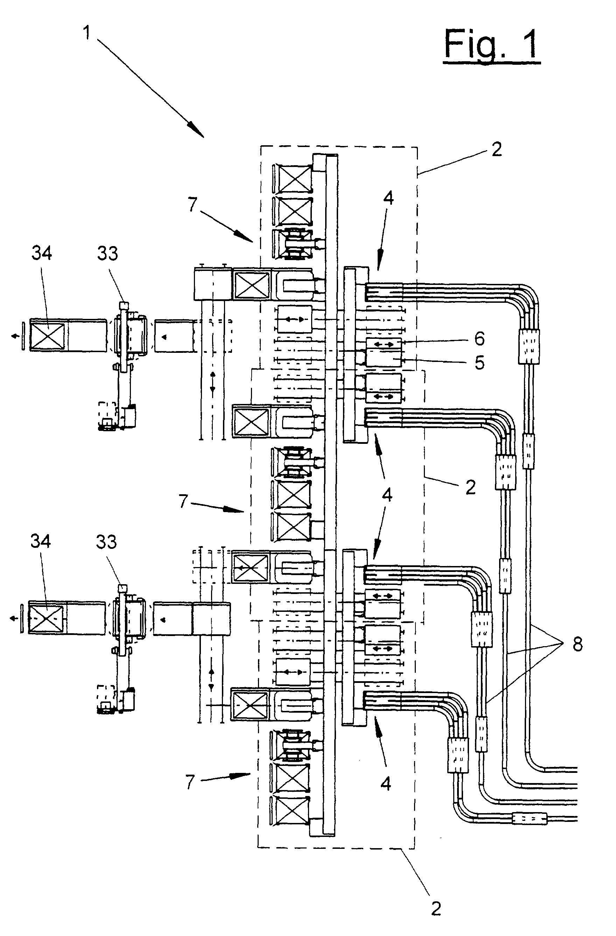

Figur 1, 2 und 3 verdeutlichen in einem Schemaplan ein Flaschenbehandlungssystem (1), das ein oder mehrere Sammel- und Palettieranlagen (2) beinhaltet. Die Sammel- und Palettieranlage (2) besteht jeweils aus einer Sammeleinrichtung (4) und einem Palettierer (7). Die Sammeleinrichtungen (4) weisen ihrerseits ein oder mehrere Umsetzer (5) und ein oder mehrere bewegliche bzw. transportable Zwischenträger (6) auf, welche die Sammeleinrichtung (4) mit dem zugehörigen Palettierer (7) verbinden.

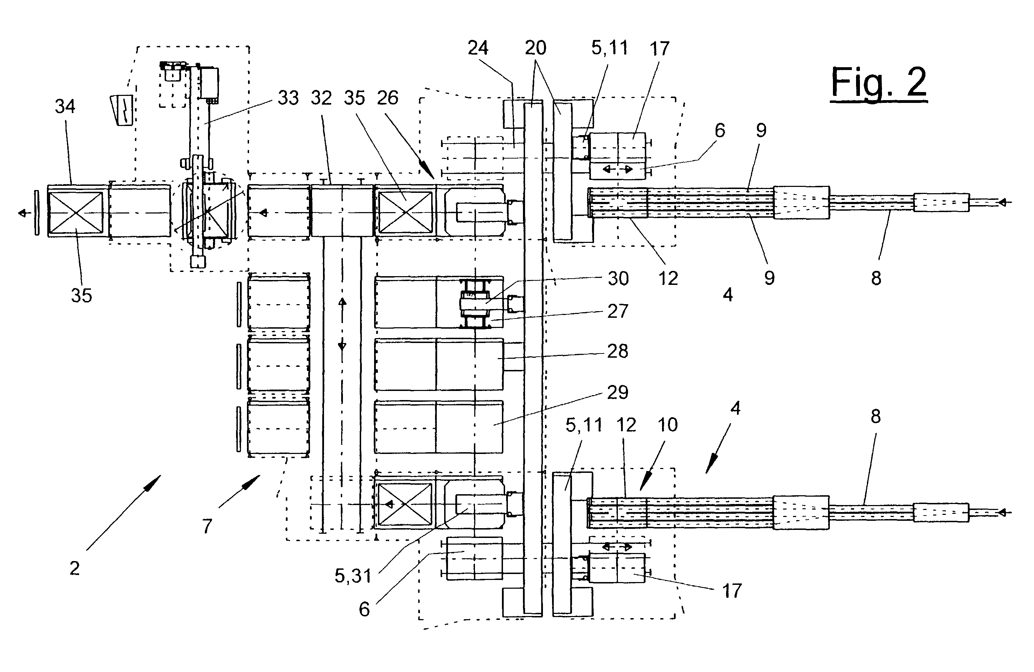

Die Sammel- und Palettieranlage (2) nimmt die in ein oder mehreren Schlangen oder Strängen (9) von einem Flaschenerzeuger (36) (in Figur 1 und 2 nicht dargestellt) über ein oder mehrere Flaschenförderer (8) zugeführten Flaschen (3) auf, sammelt sie in Flaschenlagen (25) und stapelt diese zu mehrlagigen Paletten (35) auf. An den Palettierer (7) können sich ausgangsseitig ein oder mehrere Verpackungseinrichtungen (33) nebst Ausgabestationen (34) anschließen.

In der gezeigten Ausführungsform von Figur 1 hat das Flaschenbehandlungssystem (1) z.B. drei Sammel- und Palettieranlagen (2), die nebeneinander in Reihe angeordnet sind. Gestrichelte Linien verdeutlichen die Anlagengrenzen. Figur 2 zeigt die mittlere Sammel- und Palettieranlage (2) in einer größeren Darstellung.

An die mittlere Anlage (2) sind zwei Flaschenförderer (8) und an die beiden äußeren Anlagen (2) je ein Flaschenförderer (8) angeschlossen. Die Flaschenförderer (8) sind in Figur 1 und 2 vorzugsweise als Luftförderer ausgebildet. Diese weisen einen geschlitzten Luftströmungskanal auf, in dem die Flaschen (3) an dem besagten Kragen hängend geführt und von einer im Kanal entlangschießenden Luftströmung vorwärts getrieben werden. Die Flaschen (3) bewegen sich im Flaschenförderer (8) mit einer sehr hohen Geschwindigkeit von z.B. zehn Flaschen pro Sekunde. Um die Flaschen (3) trotzdem noch handhaben zu können, wird jeder Flaschenförderer (8) nach und nach über Weichen in mehrere Stränge (9) aufgeteilt. An den Sammel- und Palettieranlagen münden dann beispielsweise je vier solcher Stränge (9) parallel nebeneinander.

Der Flaschenerzeuger (36) besteht z.B. aus ein oder mehreren Blasmaschinen für Kunststoff-Flaschen. Er ist im Ausführungsbeispiel von Figur 1 und 2 in größerem Abstand zu der Sammel- und Palettieranlage (2) angeordnet, wodurch die Flaschenförderer (8) eine entsprechend große Länge haben und dazu vorzugsweise in der vorerwähnten Art als Luftförderer ausgebildet sind.

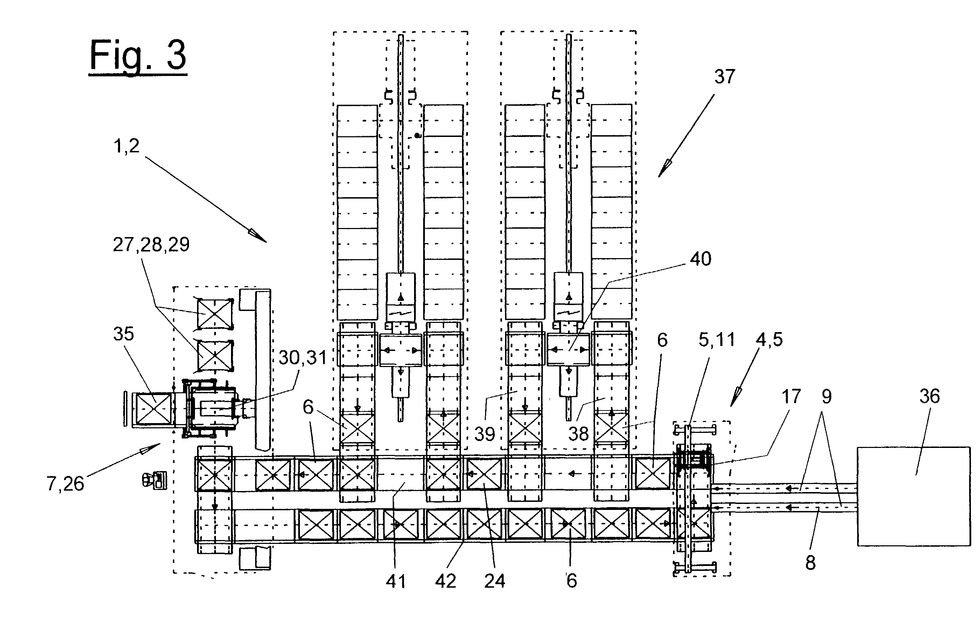

In der Variante von Figur 3 befindet sich der Flaschenerzeuger (36) in unmittelbarer Nähe an der Sammel- und Palettieranlage (2). Die Flaschenförderer (8) sind hier vorzugsweise als kurze und gerade Förderer ausgebildet, die die vom Flaschenerzeuger (36) produzierten und laufend ausgegebenen Flaschen (3) in beispielsweise zwei Schlangen oder Strängen (8) an die Sammeleinrichtung (4) mit dem Umsetzer (5) übergeben. Vor oder an der Übergabestelle können sich auch Verzweigungen auf mehr als zwei Stränge (9) befinden.

Der oder die Flaschenförderer (8) können in beliebig geeigneter Weise ausgebildet sein. Es können beispielsweise kurze Luftförderer sein. Es kann sich aber auch um eine beiliebige andere geeignete Konstruktion handeln. Vorzugsweise können die Flaschenförderer (8) eine geeignete und vorzugsweise kleine Staustrecke oder Pufferstrecke zur Übergabe der kontinuierlich in Schlangen hintereinander zugeführten Flaschen (3) an den intermittierend arbeitenden Umsetzer (5) aufweisen. In einer abgewandelten Ausführungsform kann der Flaschenerzeuger (36) seine Flaschen (3) auch direkt an den Umsetzer (5) übergeben.

Wie Figur 3 im weiteren verdeutlicht, kann die Sammel- und Palettieranlage (2) auch mindestens ein Zwischenlager (37) besitzen, das zwischen der Sammeleinrichtung (4) und dem Palettierer (7) angeordnet ist. Für den Transport der einzeln beweglichen Zwischenträger (6) ist eine Transporteinrichtung (24) vorgesehen, die vorzugsweise im Kreislauf arbeitet und einen Vorlauf (41) und einen Rücklauf (42) aufweist. Die Transporteinrichtung (24) verbindet die Sammeleinrichtung (4) mit dem Palettierer (7). Außerdem ist auch das Zwischenlager (37) an die Transporteinrichtung (24) und dabei vorzugsweise an deren Vorlauf (41) angeschlossen.

Das Zwischenlager (37) kann in beliebig geeigneter Weise ausgebildet sein, z.B. als Hochregallager. Es kann ein oder mehrere Lagerreihen aufweisen mit entsprechend ein oder mehreren geeigneten Regalförderzeugen (40). Die einzelnen Lagerbereiche haben jeweils eine Eingabe (38) und eine Ausgabe (39) für die beladenen Zwischenträger (6), die beide vorzugsweise an den Vorlauf (41) angeschlossen sind. Das Regalförderzeug (40) übernimmt dann regalintern die Zwischenträger (6) von der Eingabe und speichert sie in den vorgesehenen Lagerpositionen. Umgekehrt erfolgt vom Regalförderzeug (40) die Auslieferung der Zwischenträger (6) über die Ausgabe (39). Über den Vorlauf (41) gelangen sie dann direkt zum Palettierer (7).

Auf dem Rücklauf (42) werden vom Palettierer (7) die entladenen und leeren Zwischenträger (6) der Sammeleinrichtung (4) mit dem Umsetzer (5) wieder zugeführt. Hierbei kann der Rücklauf (42) eine Staustrecke besitzen. An den Rücklauf (42) kann aber auch ein eigenes Lager für die Pufferung der Zwischenträger (6) angeschlossen sein. Dieses Trägerlager ist der Übersicht halber nicht dargestellt.

Der Vorlauf (41) und der Rücklauf (42) sind vorzugsweise als gerade Förderstränge ausgebildet. Es kann sich hierbei um Förderbänder, Rollengänge oder andere geeignete Fördermittel handeln. An den Endpunkten findet über entsprechende Querförderer eine Umsetzung der Zwischenträger (6) statt. An dem endseitigen Querförderer übernimmt der Palettierer (7) die Flaschenlagen (25) von den Zwischenträgern (6), so daß die leeren Zwischenträger (6) dann auf den Rücklauf (42) zurückfahren können. Am vorderen Ende befindet sich der Querförderer im Bereich der Sammeleinrichtung (4) bzw. des Umsetzers (5). Dadurch können ohne Zeit- und Taktunterbrechung sehr schnell fertig beladene Zwischenträger (6) auf den Vorlauf (41) abgefördert und neue leere Zwischenträger (6) in die Beladeposition gebracht werden. Dadurch kann außerdem während des Transports und während der Entladung am Palettierer (7) bereits der nächste leere Zwischenträger (6) an der Sammeleinrichtung (4) beladen werden.

Figur 1, 2 und 4 zeigen eine Variante für die Zwischenträger (6) und die Transporteinrichtung (24). In der gezeigten Ausführungsform handelt es sich um ein Shuttle, das gerade Vorwärts- und Rückwärtsbewegungen ausführt und die Zwischenträger (6) von ihrer Aufnahmeposition an der Sammeleinrichtung (4) zur Übergabeposition am Palettierer (7) auf gerader Bahn hin und zurück bewegt.

In der Ausführungsform von Figur 1 ist eine weitere Variante dargestellt. Hier sind z.B. an den beiden äußeren Sammeleinrichtungen (4) je zwei Zwischenträger (6) mit Shuttles (24) parallel nebeneinander angeordnet, die zeitversetzt arbeiten. Dies ermöglicht ebenfalls eine Überschneidung der Taktzeiten beim Be- und Entladen sowie beim Transport der Zwischenträger (6). Die Transportrichtung der Zwischenträger (6) verläuft in der bevorzugten Ausführungsform längs der Flaschenreihen (14) und quer zu den Traversen (20).

In Figur 1 sind außerdem Sammeleinrichtungen (4) mit unterschiedlicher Kapazität dargestellt. Die beiden äußeren Sammeleinrichtungen (4) sind auf eine hohe Leistung von z.B. 100.000 Flaschen pro Stunde ausgelegt und haben dazu entsprechend schnelle Übersetzer (5). Die mittlere Sammeleinrichtung (4) hat eine geringere Kapazität und langsamere Übersetzer (5). Zum Ausgleich und aus Platzgründen kann hier allerdings die Sammeleinrichtung (4) zwei Übersetzer (5) mit jeweils einem Zwischenträger (6) nebst Transporteinrichtung (24) aufweisen, wobei jedem Übersetzer (5) ein Flaschenförderer (8) in vorbeschriebenen Weise zugeordnet ist. Die Übersetzer (5) können jeweils eine separate eigene oder eine gemeinsame Traverse (20) haben.

Die Flaschen (3) bestehen vorzugsweise aus Kunststoff, insbesondere Polyethylentherephthalat. Diese sogenannten PET-Flaschen sind dünnwandig und haben ein niedriges Gewicht. Am Flaschenhals besitzen sie einen umlaufenden und seitlich vorstehenden Kragen, an dem sie z.B. durch die Flaschenförderer (8) hängend gegriffen und geführt werden können. Am Boden haben diese Flaschen in der Regel eine zentrale Einbuchtung und am umgebenden Rand mehrere hochlaufende Einkerbungen, so daß die Standfläche von fünf rund um die Flaschenmittelachse verteilten Auflagepunkten gebildet wird. Der Durchmesser der Standfläche ist dabei kleiner als der Außendurchmesser der Flaschen, so daß die PET-Flaschen eine gewisse Labilität haben. Die Flaschen (3) können sich außerdem elektrostatisch aufladen und sich dadurch gegenseitig abstoßen. Durch die geringe Standfestigkeit und das niedrige Gewicht reagieren die Flaschen (3) empfindlich auf mechanische Stöße, Luftströmungen etc. und neigen zum Umfallen.

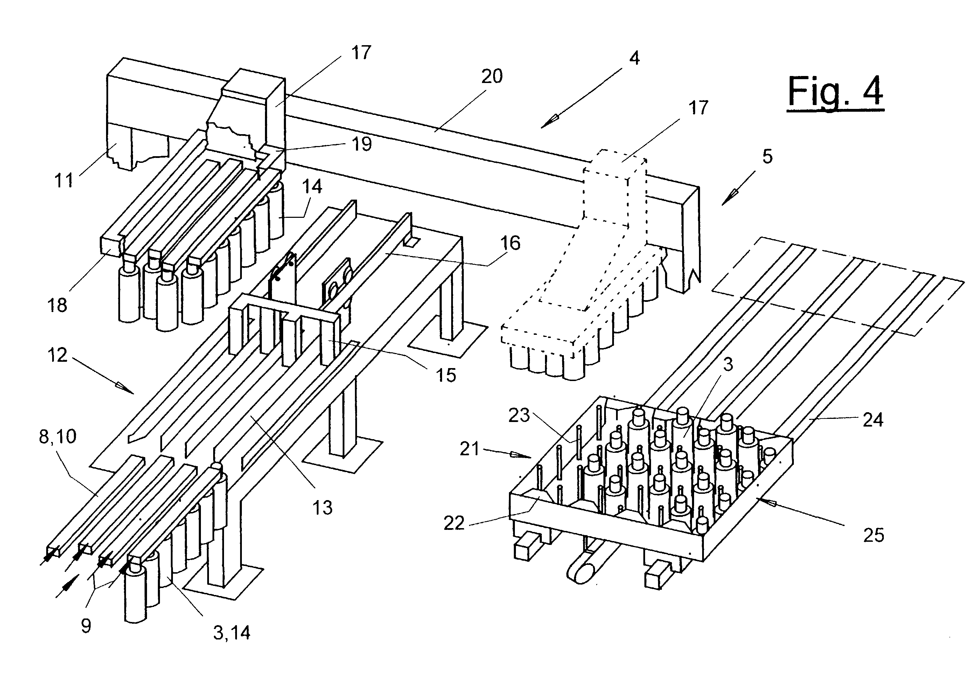

Figur 4 verdeutlicht den Mündungs- oder Endbereich (10) des Flaschenförderers (8) an der Sammeleinrichtung (4). Hier kommen die Flaschen (3) strangweise in Reihen oder Schlangen hintereinander an und werden durch steuerbare Verschlüsse (nicht dargestellt) am Ende des Förderers (8) gestoppt. In diesem Bereich ist eine Stau- oder Auslaufstrecke, in der auch z.B. die Förderluft abgeblasen wird. Die im Endbereich (10) befindlichen Flaschen (3) werden von hinten durch die nachdrängenden Flaschen nach vorn getrieben. Aus Figur 4 ist auch ersichtlich, wie die Flaschen (3) am Kragen in den Förderkanälen hängen.

Figur 4 zeigt eine Ausführungsform der Sammeleinrichtung (4) im einzelnen. Die Ausführung entspricht Figur 1 und 2, kann aber auch bei einer Anlage gemäß Figur 3 eingesetzt werden.

Die Sammeleinrichtung (4) besteht jeweils aus mindestens einer Reihenaufnahme (12) und mindestens einem Umsetzer (5) sowie vorzugsweise mehreren Zwischenträgern (6). Die Sammeleinrichtung (4) weist mehrere formschlüssige Flaschenführungen (13,18,21) auf. Dadurch werden die Flaschen (3) vom Flaschenförderer (8) reihenweise übernommen, auf den Zwischenträger (6) umgesetzt, zu einer Flaschenlage (25) gruppiert und dann dem Palettierer (7) zugeführt, wobei die Flaschen (3) vorzugsweise und im wesentlichen ständig so geführt sind, daß sie nicht umfallen können und sich nur in begrenzter und kontrollierter Weise bewegen können. Der Zwischenträger (6) steht während des Umsetz- und Beladevorgangs.

Die Reihenaufnahme (12) ist an den Endbereich (10) des Flaschenförderers (8) angeschlossen. Die Reihenaufnahme (12) besitzt einen beispielsweise stationären Stautisch mit mehreren Aufnahmegassen und geländerartigen Flaschenführungen (13), die sich in entsprechender Zahl und in Verlängerung der Endbereiche (10) des Flaschenförderers (8) erstrecken und die vom Flaschenförderer (8) übernommenen Flaschen (3) seitlich führen. Die Geländer (13) sind in ihrer Weite verstellbar und lassen sich auf verschiedene Flaschenformate anpassen. Außerdem können sie seitlich verschoben werden, um in ihrer Zahl und Anordnung gegenüber dem Flaschenförderer (8) angepaßt zu werden. An den fördererseitigen Enden können die Geländer (13) schräge Leitflächen zum Angleiten und Führen der Flaschen (3) haben.

Auf dem Stautisch (12) können die Flaschen (3) stehend entlangrutschen. Alternativ kann der Stautisch (12) auch statt der stationären Grundfläche ein Förderband oder dergleichen aufweisen, das sich in Förderrichtung der Flaschen (3) bewegt. Zur Aufnahme der Flaschen (3) werden die Verschlüsse der Endbereiche (10) taktweise geöffnet, so daß die hier gehaltenen Flaschenreihen (14) auf den Stautisch (12) geschoben werden können. Sobald die vorgegebene Reihenlänge erreicht ist, schließen wieder die Verschlüsse der Endbereiche (10), so daß sich die nächste Flaschencharge aufstauen kann.

Die Reihenaufnahme (12) hat im Bereich der Flaschenführungen (13) jeweils mindestens einen Anschlag (15). Die Anschläge (15) können in der einfachsten Ausführungsform stationär angeordnet sein. Sie haben dabei von Reihe zu Reihe einen periodischen axialen Versatz, der vorzugsweise die Hälfte des Flaschendurchmessers beträgt. Dadurch werden die benachbarten Flaschenreihen (14) so gegeneinander versetzt angeordnet, daß ein Lückenschluß und in der späteren Flaschenlage (25) eine möglichst dichte Flaschenpackung entsteht.

In der gezeigten Ausführungsform sind die Anschläge (15) außerdem axial beweglich und besitzen hierfür einen gesteuerten Antrieb (16), der beispielsweise auf einer Tischverlängerung oder unterhalb des Stautisches (12) angeordnet ist. Bei der Übernahme einer neuen Flaschenladung werden die Anschläge (15) unmittelbar vor dem Endbereich (10) des Flaschenförderers (8) positioniert. Sobald die Verschlüsse des Endbereichs (10) öffnen und die Flaschen (3) herausdrängen, weichen die Anschläge (15) gesteuert zurück und bieten dadurch den aufgenommenen Flaschen (3) eine axiale Führung. Die Flaschen (3) können dadurch bei der Aufnahme nicht umgeworfen werden. Insgesamt sind bei der Aufnahme die Flaschen (3) rundum an vier Seiten formschlüssig geführt, wobei die rückwärtige Führung durch die nächstfolgende Flasche (3) in der Reihe erfolgt.

Nach der Übernahme stehen die Flaschenreihen (14) auf der Reihenaufnahme (12) für den Umsetzer (5) bereit. Der Umsetzer (5) ist vorzugsweise als zwei- oder mehrachsiger Roboter (11) mit frei Steuer- und programmierbaren Achsen ausgebildet und besitzt eine quer zu den Flaschenreihen (14) sich erstreckende portalartige Traverse (20), an der ein oder mehrere Greifeinrichtungen (17) hin und her fahren können und die Flaschenreihen (14) auf den am Vorlauf (41) bereitstehenden Zwischenträger (6) überheben oder übersetzen.

Die Greifeinrichtung (17) ist dabei als mehrachsig beweglicher Greifkopf ausgebildet. Sie besitzt mehrere Reihengreifer (18), die die Flaschenreihen (14) in der Reihenaufnahme (12) in geeigneter Weise im Kopfbereich greifen, festhalten und auf dem Zwischenträger (6) wieder abgeben. Die Reihengreifer (18) bestehen zum Beispiel aus langen Greifkanälen mit seitlichen Greifarmen, die unter die Krägen der Flaschen fassen und diese dadurch formschlüssig halten.

Die Reihengreifer (18) können ein oder mehrere Verstelleinrichtungen (19) aufweisen. In der gezeigten Ausführungsform erlaubt die Verstelleinrichtung (19) eine Seitenbewegung der Reihengreifer (18), wodurch die Flaschenreihen (14) nach der Aufnahme enger zusammenrücken können. Im Endbereich (10) und der Reihenaufnahme (12) sind die Flaschenreihen (14) wegen Formatanpassung und aus anderen baulichen Gründen ein Stück voneinander distanziert. Dieser Seitenabstand ist größer als der in der Flaschenlage (25) erwünschte Abstand. Durch die Seitenbewegung der Reihengreifer (18) können die Flaschenreihen (14) eng aneinander geführt werden und dabei entsprechend der gewünschten Packungsdichte sogar in Kontakt miteinander gebracht werden. Die Verstelleinrichtung (19) hat hierfür einen geeigneten Antrieb nebst einer frei programmierbaren Steuerung.

Im gezeigten Ausführungsbeispiel haben die Flaschenreihen (14) und der Zwischenträger (6) die gleiche Länge. Zum Befüllen des Zwischenträgers (6) werden die Flaschenreihen (14) nebeneinandergesetzt, wobei die Greifeinrichtung (17) mehrmals hin und her fährt. In dieser gezeigten Ausführungsform ist die auf dem Zwischenträger (6) gebildete Flaschenlage (25) so groß wie der Palettenboden.

In Abwandlung der gezeigten Ausführungsform kann ein Zwischenträger (6) auch eine Überlänge haben und zwei oder mehr Flaschenlagen (25) aufnehmen. Dadurch müssen entsprechend zwei oder mehr Flaschenreihen (14) hintereinander auf dem Zwischenträger (6) angeordnet werden. Zu diesem Zweck kann die Verstelleinrichtung (19) eine zusätzliche Beweglichkeit in Reihenlängsrichtung aufweisen und dazu beispielsweise eine Teleskopeinrichtung zum Ausfahren der Reihengreifer (18) besitzen (nicht dargestellt). Außerdem führt die Verstelleinrichtung (19) die zum Umsetzen erforderlichen Hebe- und Senkbewegungen der Reihengreifer (18) aus. Beim Umsetzvorgang bilden die Reihengreifer (18) die Flaschenführung.

Auf dem vorzugsweise wannenförmigen Zwischenträger (6) ist ebenfalls eine Flaschenführung (21) vorhanden. Sie besteht beispielsweise aus einem Gefache, in dem die Flaschen (3) ähnlich wie in der Reihenaufnahme (12) stehend und rundum formschlüssig geführt sind. In der gezeigten Ausführungsform hat der Zwischenträger (6) dazu einen der Flaschenkontur nachgeformten Trägerrand (22), der durch entsprechende Vorsprünge auch den Reihenversatz berücksichtigt. Im Innenbereich des Zwischenträgers (6) sind eine Vielzahl hochstehender Führungspins (23) angeordnet, die zwischen je vier benachbarte Flaschen (3) greifen. Der Trägerrand (22) und die Führungspins (23) können Angleitschrägen für ein erleichtertes Einführen und Einsetzen der Flaschen (3) besitzen. Alternativ können die Flaschenführungen (21) auch auf beliebige andere Weise, z.B. durch Fachstege oder dergleichen, gebildet werden.

Unterschiedliche Ausführungsformen gibt es auch für den Palettierer (7). Der einzelne Palettierer (7) weist ein oder mehrere Palettierplätze (26) auf, an denen die Flaschenlagen (25) auf einem Palettenboden nach und nach zur fertigen Palette (35) aufgestapelt werden. Der Palettierplatz (26) ist seitlich neben der Endposition des Zwischenträgers (6) bzw. der Transporteinrichtung (24) angeordnet. Auf der anderen Seite können sich ein oder mehrere Einlagenstapel (27,28,29) in Reihe anschließen. Diese Stapel beinhalten die Palettenböden und die Zwischenlagen bzw. Decklagen, die für das Aufschichten der Flaschenlagen (25) erforderlich sind und nachfolgend als Palettiereinlagen bezeichnet werden. Bei den Zwischen- und Decklagen handelt es sich beispielsweise um Kartons oder andere geeignete flächige Materialien, die zwischen die Flaschenlagen (25) eingelegt werden.

Der Palettierer (7) besitzt mindestens eine Greifeinrichtung (30,31) für das Übersetzen der Flaschenlagen (25) vom Zwischenträger (6) auf den Palettierplatz (26) und für das Holen und Einlegen der Palettiereinlagen von den Stapeln (27,28,29). In der bevorzugten Ausführungsform sind getrennte Greifeinrichtungen (30,31) vorhanden, um die Leistung zu erhöhen.

Der Palettierer (7) ist ebenfalls vorzugsweise als linearer mehrachsiger Roboter (11) ausgebildet, der eine quer zu den Flaschenreihen sich erstreckende Traverse (20) zum Verfahren der Greifeinrichtungen (30,31) aufweist. Die Greifeinrichtungen (30,31) haben geeignete Greifköpfe, die zumindest heb- und senkbar sind und eventuell weitere Bewegungsachsen haben.

Die Greifeinrichtung (31) ist als Flaschengreifer ausgebildet, der vorzugsweise die gesamte Flaschenlage (25) greift und in einem Hub auf den Palettierplatz (26) übersetzt. Die Greifeinrichtung (31) kann für die Bedienung mehrlagiger und überlanger Zwischenträger (6) eine zusätzliche axiale Verstellbarkeit in Form einer Teleskopanordnung oder dergleichen aufweisen.

Im Ausführungsbeispiel von Figur 1 haben die beiden außenliegenden Hochleistungs-Palettierer (7) jeweils eigene Einlagenstapel (27,28,29). Die Greifeinrichtung (31) bedient beide Zwischenträger (6). Der in Figur 2 näher dargestellte mittlere Palettierer (7) ist auf eine niedrigere Leistung ausgerichtet. Er besitzt zwei voneinander distanzierte Greifeinrichtungen (31) für den jeweils einen zugeordneten Zwischenträger (6). Zwischen den Greifeinrichtungen (31) sind gemeinsame Einlagestapel (27,28,29) mit einer nach beiden Seiten arbeitenden Greifeinrichtung (30) angeordnet. Diese bedient dadurch beide Palettierplätze (26).

In der Ausführungsform von Figur 1 und 2 sind alle Greifeinrichtungen (30,31) innerhalb der einzelnen Palettierer (7) und auch anlagenübergreifend an einer gemeinsamen Traverse (20) angeordnet. In entsprechender Weise sind dabei die Einlagenstapel (27,28,29), die Palettierplätze (26) und die Endpositionen der Zwischenträger (6) in einer Reihe nebeneinander angeordnet.

An die Palettierplätze (26) schließt sich jeweils ein in Reihenlängsrichtung arbeitender Palettenförderer (32) an, der vorzugsweise unter Einschaltung einer Warteposition an einen Querförderer angeschlossen ist. Über den Querförderer werden jeweils zwei benachbarte Palettenförderer (32) miteinander verbunden und gemeinsam auf eine Verpackungseinrichtung (33) geschaltet. Hierbei können weitere Warte- und Staupositionen vorgesehen sein. Der Querförderer kann auch wie in der insoweit etwas abgewandelten Figur 2 gezeigt, für die rückseitige Beschickung der Einlagenstapel (27,28,29) eingesetzt werden.

Die am Palettierplatz (26) gebildeten fertigen Paletten (35) werden über Längs- und Querförderer einer Verpackungseinrichtung (nicht dargestellt) zugeführt und hier beispielsweise mit einer Plastikfolie umhüllt und gegebenenfalls zur Stabilisierung umreift. An der anschließenden Ausgabestation werden die verpackten Paletten (35) zur Abholung bereitgestellt und von hier beispielsweise in ein Zwischenlager und weiter zur Füllanlage (nicht dargestellt) gebracht.

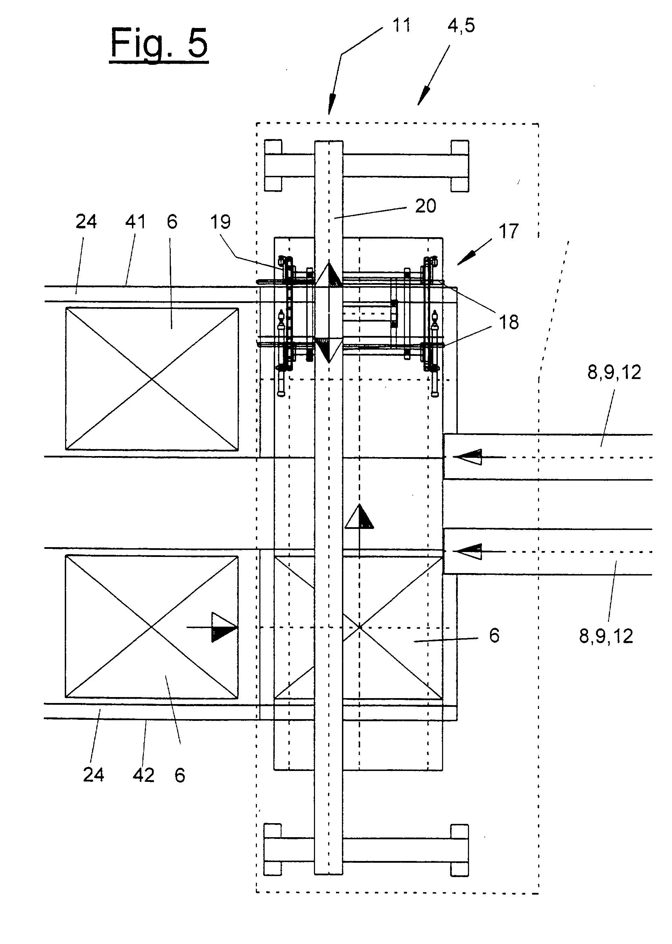

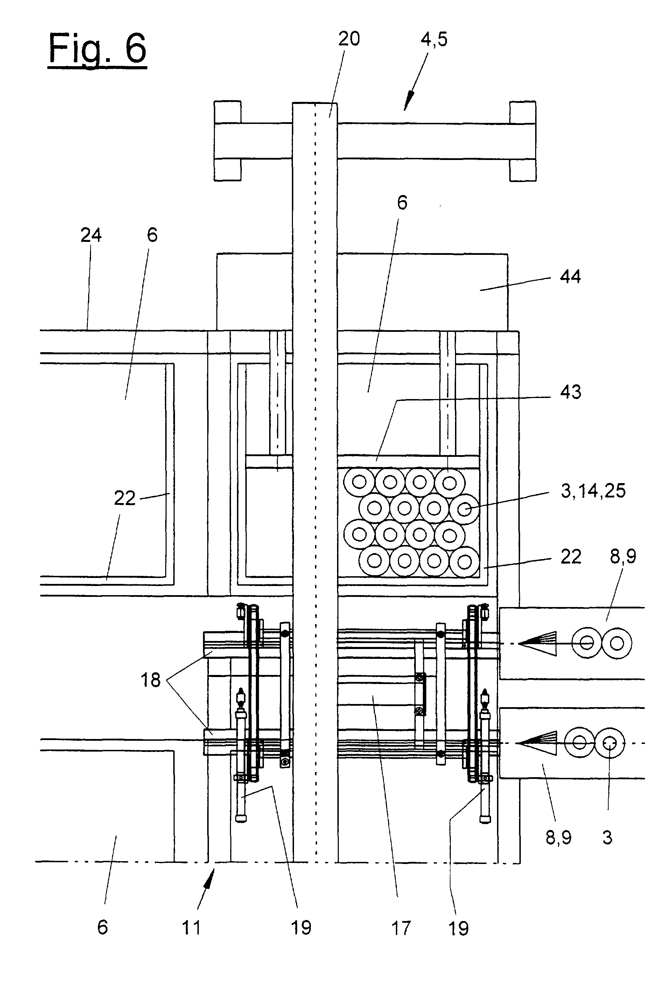

Figur 5 und 6 zeigen Abwandlungen der Sammeleinrichtung (4) bzw. des Umsetzers (5). In beiden Fällen kann der Umsetzer (5) mit der oder den Greifeinrichtungen (17) die Flaschen (3) direkt und ohne Zwischenschaltung eines Stautisches (12) von den Flaschenförderern (8) übernehmen. Hierbei sind die Reihengreifer (18) in gleicher Höhe wie die Flaschenförderer (8) angeordnet, so daß die Flaschen (3) direkt und hängend in die Reihengreifer (18) überschoben werden können. Die Verstelleinrichtungen (19) erlauben hierbei eine Anpassung und genaue Positionierung der Reihengreifer (18) an den Flaschenförderern (8). Hierbei können insbesondere auch mehrere Falschengreifer (18) gleichzeitig beladen werden. In der gezeigten Ausführungsform hat der Greifkopf (17) zwei Flaschengreifer (18). Die Anzahl kann aber auch beliebig höher sein. Sie kann vorzugsweise mit der Zahl der Stränge (9) bzw. Flaschenförderer (8) korrespondieren. Die Zahl kann aber auch unterschiedlich sein.

Die Zwischenträger (6) in Figur 5 und 6 können der Ausführungsform von Figur 4 entsprechen. Figur 6 zeigt hierzu jedoch noch eine Abwandlung. Die Zwischenträger (6) bestehen dort aus einseitig offenen Trays mit einer Bodenplatte und drei U-förmig umlaufenden Trägerrändern (22). Anstelle der fehlenden vierten Trägerwand ist an der Beladestelle ein querbeweglicher Schieber (43) mit einem geeigneten Antrieb (44) vorgesehen. Der Schieber (43) bildet zusammen mit den vorhandenen Trägerrändern (22) die seitliche Flaschenführung (21). Bei dieser Ausführungsform hat der Zwischenträger (6) bzw. dessen Bodenplatte keine im Mittelbereich hochstehenden Führungspins (23).

Der Schieber (43) dient auch zur Positionierung und zum Zusammenschieben der Flaschen (3) auf dem Zwischenträger (6). Die Flaschenreihen (14) können vom Umsetzer (5) mit gegenseitiger seitlicher Distanz auf dem Zwischenträger (6) abgesetzt werden. Der Schieber (43) ist dazu etwas zurückgezogen und bietet den nötigen Freiraum. Anschließend fährt der Schieber (43) wieder vor und schiebt die abgestellten Flaschenreihen (14) auf die bereits eingelagerten Flaschenreihen und bildet dabei die erforderliche Packungsdichte der Flaschenlager (25). Bei dieser Vorgehensweise wird Zeit für den Umsetzer (5) gespart, was der bevorzugten Direktbeladung der Flaschengreifer (18) an den Faslchenförderern (8) zugute kommt. Außerdem können die Zwischenträger (6) dadurch beliebige Flaschenformate aufnehmen. Die Trägerränder (22) sind in diesem Fall auch als glatte Wände ohne führende Profilierung ausgebildet. In Figur 6 ist die Flaschenanordnung nur teilweise und rein schematisch dargestellt.

Für den weiteren Transport der Zwischenträger (6) kann die vierte Trägerwand entfallen. Die Flaschenlage (25) ist dann an drei Seiten umlaufend über die verbliebenen drei Trägerränder (22) geführt. Alternativ kann der Schieber (43) auch als vierte Trägerwand ausgebildet und entsprechend lösbar mit dem Antrieb (44) verbunden sein. Beim Beladen wird die Trägerwand ausgehängt und fungiert als Schieberplatte. Am Ende der Beladung wird sie in geeigneter Weise wieder mit dem Zwischenträger (6) verbunden.

Eine weitere Variante des Flaschenbehandlungssystems (1) ist auch hinsichtlich des Zwischenträgerkreislaufs möglich. In der in Figur 3 gezeigten Ausführungsform zirkulieren die Zwischenträger (6) innerhalb des Flaschenbehandlungssystems (1) zwischen der Sammeleinrichtung (4) und dem Palettierer (7). Sie werden permanent beladen und entladen, wobei sie zwischenzeitlich im beladenen oder leeren Zustand auch zwischengespeichert werden können. In der angesprochenen Abwandlung ist es möglich, die Zwischenträger (6) auch zur Bildung der Palette (35) einzusetzen und aus dem Flaschenbehandlungssystem (1) zu entlassen. In diesem Fall haben die Zwischenträger (6) vorzugsweise die in Figur 4 gezeigten Flaschenführungen (21). Außerdem können die Zwischenträger (6) auch geeignete gegenseitige Führungen haben, um auf einfache und selbstzentrierende Weise übereinander zur Palettenbildung gestapelt werden zu können. Zu diesem Zweck ist auch der Palettierer (7) mit seinem Roboter (11) entsprechend in geeigneter Weise ausgebildet und greift statt der einzelnen Flaschenlagen (25) den ganzen Zwischenträger (6) und setzt ihn zur Palettenbildung um. Bei dieser Variante zirkulieren die Zwischenträger (6) in einem größeren Kreislauf, der über die Füllanlage, den oder die Zwischenhändler und den Kunden wieder zurück über eine Wiederaufbereitungs-oder Reinigungsanlage zum Flaschenbehandlungssystem (1) führt.

Der zirkulierende Zwischenträger (6) nimmt dabei nicht nur die im Flaschenbehandlungssystem (1) aufgeladenen leeren Flaschen (3), sondern nach der Befüllung auch die vollen Flaschen auf.

Abwandlungen der gezeigten und beschriebenen Ausführungsform sind in verschiedener Weise möglich. Der Flaschenförderer (8) kann in beliebig geeigneter Weise ausgebildet sein. Statt eines Luftförderers mit hängend transportierten Flaschen (3) kann auch ein Standförderer mit Rollen, Förderband oder dergleichen anderen geeigneten Transportmechanismen vorgesehen sein. Ferner kann die Zahl der Flaschenreihen (14) im Bereich des Flaschenförderers (8) und der Reihenaufnahme (12) bzw. des Umsetzers (5) variieren. Zwischen den besagten Komponenten müssen auch nicht immer die Reihenzahlen gleich sein. Entsprechendes gilt für die Greifeinrichtung (31) zum Übersetzen der Flaschenlagen (25) am Palettierplatz (26). Diese Greifeinrichtung (31) kann in der einen Variante nur einen Teil der Flaschenlage (25) greifen und übersetzen. In der anderen Variante mit überlangen Zwischenträgern (6) ist es möglich, mehrere Flaschenlagen (25) auf einmal zu greifen. In der beschriebenen Ausführungsform ist die Flaschenlage (25) so groß wie die Palettenbodenfläche. Diese Größenangabe ist eine Definitionsfrage und kann auch abgewandelt werden. Unter Umständen werden an einer Sammel- und Palettieranlage (2) auch verschiedene Palettengrößen und/oder Flaschenformate verarbeitet, so daß der Zwischenträger (6) nur teilweise befüllt ist. Variabel sind ferner auch die konstruktive Ausbildung der technischen Komponenten der Sammel- und Palettieranlagen (2), insbesondere der Reihenaufnahme (12), des Umsetzers (5), des Palettierers (7), des Zwischenträgers (6) und dergleichen. Insbesondere können die Greifeinrichtungen zum Erfassen der Flaschenreihen (14) in beliebig geeigneter Weise ausgebildet sein. Der Zwischenträger (6) kann plattenförmig sein oder eine beliebige andere geeignete Gestaltung als Behälter oder Träger für die Flaschenlagen haben.

### BEZUGSZEICHENLISTE

- 1: Flaschenbehandlungssystem
- 2: Sammel- und Palettieranlage
- 3: Flasche
- 4: Sammeleinrichtung
- 5: Umsetzer
- 6: Zwischenträger
- 7: Palettierer
- 8: Flaschenförderer
- 9: Strang
- 10: Endbereich
- 11: Roboter
- 12: Reihenaufnahme, Stautisch
- 13: Flaschenführung, Geländer
- 14: Flaschenreihe
- 15: Anschlag
- 16: Antrieb
- 17: Greifeinrichtung, Greifkopf
- 18: Flaschenführung, Reihengreifer
- 19: Verstelleinrichtung
- 20: Traverse
- 21: Flaschenführung
- 22: Trägerrand
- 23: Führungspin
- 24: Transporteinrichtung, Shuttle
- 25: Flaschenlage
- 26: Palettierplatz
- 27: Einlagenstapel Palettenboden
- 28: Einlagenstapel Zwischenlage
- 29: Einlagenstapel Decklage
- 30: Greiferinrichtung Palettiereinlagen
- 31: Greiferinrichtung Flaschenlage
- 32: Palettenförderer
- 33: Verpackungseinrichtung
- 34: Ausgabestation
- 35: Palette
- 36: Flaschenerzeuger, Blasmaschine
- 37: Zwischenlager
- 38: Eingabe
- 39: Ausgabe
- 40: Regalförderzeug
- 41: Vorlauf
- 42: Rücklauf
- 43: Schieber
- 44: Antrieb

## Patentansprüche

1. Verfahren zum Sammeln von leeren Flaschen (3), insbesondere Kunststoffflaschen, und zum Palettieren der Flaschen (3), wobei die von einem Flaschenerzeuger (36) oder einem Flaschenförderer (8) in ein oder mehreren Schlangen hintereinander zugeführten leeren Flaschen (3) mit mindestens einer vorgeschalteten Sammeleinrichtung (4) übernommen und später einem Palettierer (7) zugeführt und dort palettiert werden, **dadurch gekennzeichnet, daß** die zugeführten leeren Flaschen (3) an der Sammeleinrichtung (4) auf ein oder mehrere Zwischenträger (6) unter Bildung von Flaschenlagen (25) umsetzt werden und der Zwischenträger (6) mit den Flaschen (3) anschließend zum Palettierer (7) transportiert wird.

2. Verfahren nach Anspruch 1, **dadurch gekennzeichnet, daß** die Zwischenträger (6) anlagenintern im Kreislauf geführt und in einem Lager (37) zwischengespeichert werden.

3. Verfahren nach Anspruch 1 oder 2, **dadurch gekennzeichnet, daß** die Flaschen (3) mit den Zwischenträgern (6) palettiert werden.

4. Verfahren nach einem der Ansprüche 1 bis 3, **dadurch gekennzeichnet, daß** der Zwischenträger (6) direkt am Flaschenerzeuger (36), insbesondere an einer Blasmaschine, beladen wird.

5. Vorrichtung zum Sammeln von leeren Flaschen (3), insbesondere Kunststoffflaschen, und zum Palettieren der Flaschen (3), mit mindestens einem Palettierer (7) und mit mindestens einer vorgeschalteten Sammeleinrichtung (4) zur Übernahme der von einem Flaschenerzeuger (36) oder einem Flaschenförderer (8) in ein oder mehreren Schlangen hintereinander zugeführten leeren Flaschen (3), wobei eine Transporteinrichtung (24) zwischen dem Palettierer (7) und der Sammeleinrichtung (4) angeordnet ist,
**dadurch gekennzeichnet, daß** die Sammeleinrichtung (4) mindestens einen Umsetzer (5) und ein oder mehrere mit der Transporteinrichtung (24) transportable Zwischenträger (6) zur lagenweisen (25) Aufnahme der leeren Flaschen (3) aufweist.

6. Vorrichtung nach Anspruch 5, **dadurch gekennzeichnet, daß** eine hin- und hergehende oder im Kreis umlaufende Transporteinrichtung (24) für den oder die Zwischenträger (6) vorgesehen ist.

7. Vorrichtung nach Anspruch 5 oder 6, **dadurch gekennzeichnet, daß** ein Lager (37) zur Zwischenspeicherung befüllten und/oder leeren Zwischenträgern (6) vorgesehen ist.

8. Vorrichtung nach einem der Ansprüche 5 bis 7,
**dadurch gekennzeichnet, daß** die Sammeleinrichtung (4) direkt am Flaschenerzeuger (36), insbesondere an einer Blasmaschine, angeordnet ist.

9. Vorrichtung nach einem der Ansprüche 5 bis 8, **dadurch gekennzeichnet, daß** der plattenartige Zwischenträger (6) mit einer einen beweglichen Trägerrand (22) oder einen externen Schieber (43) aufweisenden Flaschenführung (21) ausgerüstet ist.

10. Vorrichtung nach einem der Ansprüche 5 bis 9, **dadurch gekennzeichnet, daß** der Umsetzer (5) und der Palettierer (7) als lineare mehrachsige Roboter (11) mit Traversen (20) und daran verfahrbaren sowie heb- und senkbaren Greifeinrichtungen (17,30,31) ausgebildet sind.

11. Vorrichtung nach einem der Ansprüche 5 bis 10, **dadurch gekennzeichnet, daß** eine Flaschenbehandlungsanlage (1) mehrere nebeneinander angeordnete Sammel- und Palettiervorrichtungen (2) mit gemeinsamen Traversen (20) aufweist.

## Claims

1. Method of collecting empty bottles (3) in particular plastic bottles, and for palletizing the bottles (3), the empty bottles (3) supplied in one or more lines one after the other from a bottle-making machine (36) or a bottle conveyor (8) being accepted by at least one preceding collecting device (4) and subsequently supplied to a palletizer (7) and palletized there, **characterized in that** at the collecting device (4) the empty bottles (3) supplied are transferred to one or more intermediate supports (6) forming layers of bottles (25), and the intermediate supports (6) with the bottles (3) are then transported to the palletizer (7).

2. Method according to Claim 1, **characterized in that** the intermediate supports (6) are led in a circle within the system and are temporarily stored in a store (37).

3. Method according to Claim 1 or 2, **characterized in that** the bottles (3) are palletized together with the intermediate supports (6).

4. Method according to one of Claims 1 to 3, **characterized in that** the intermediate supports (6) are loaded directly at the bottle-making machine (36), in particular at a blowing machine.

5. Device for collecting empty bottles (3), in particular plastic bottles, and for palletizing the bottles (3), having at least one palletizer (7) and having at least one preceding collecting device (4) to accept the empty bottles (3) supplied in one or more lines one behind another from a bottle-making machine (36) or a bottle conveyor (6), a transport device (24) being arranged between the palletizer (7) and the collecting device (4), **characterized in that** the collecting device (4) has at least one transferring means (5) and one or more intermediate carriers (6), which can be transported with the transport device (24), to accommodate the empty bottles (3) in layers (25).

6. Device according to Claim 5, **characterized in that** a transport device (24) which moves to and fro or circulates is provided for the intermediate support or supports (6).

7. Device according to Claim 5 or 6, **characterized in that** one layer (37) is provided for the temporary storage of filled and/or empty intermediate supports (6).

8. Device according to one of Claims 5 to 7, **characterized in that** the collecting device (4) is arranged directly at the bottle-making machine (36), in particular at a blowing machine.

9. Device according to one of Claims 5 to 8, **characterized in that** the plate-like intermediate support (6) is equipped with a bottle guide (21) having a moveable support edge (22) or an external slide (43).

10. Device according to one of Claims 5 to 9, **characterized in that** the transferring means (5) and the palletizer (7) are constructed as linear multi-axis robots (11) having cross members (20) and gripping devices (17, 30, 31) which can be moved on said cross members and also raised and lowered.

11. Device according to one of Claims 5 to 10, **characterized in that** a bottle handling installation (1) has a plurality of collecting and palletizing devices (2) arranged beside one another and having common cross members (20).

## Revendications

1. Procédé de collecte de bouteilles (3) vides, notamment de bouteilles en matière plastique, et de palettisation des bouteilles (3), les bouteilles (3) vides apportées les unes à la suite des autres en une ou plusieurs files par une machine (36) de fabrication de bouteilles ou un transporteur (8) de bouteilles étant prises en charge par au moins un dispositif (4) collecteur placé en amont, puis étant apportées à un palettiseur (7), où elles sont palettisées,
**caractérisé en ce que** les bouteilles (3) vides apportées au dispositif (4) collecteur sont transférées sur un ou plusieurs éléments (6) porteurs intermédiaires en formant des couches (25) de bouteilles, et l'élément (6) porteur intermédiaire pourvu des bouteilles (3) est ensuite transporté vers le palettiseur (7).

2. Procédé suivant la revendication 1, **caractérisé en ce que** les éléments (6) porteurs intermédiaires sont dirigés en circuit à l'intérieur de l'installation, et sont entreposés temporairement dans un magasin (37).

3. Procédé suivant la revendication 1 ou 2. **caractérisé en ce que** les bouteilles (3) sont palettisées avec les éléments (6) porteurs intermédiaires.

4. Procédé suivant l'une des revendications 1 à 3, **caractérisé en ce que** l'élément (6) porteur intermédiaire est chargé directement sur la machine (36) de fabrication de bouteilles, notamment sur une machine de soufflage.

5. Dispositif de collecte de bouteilles (3) vides, notamment de bouteilles en matière plastique, et de palettisation des bouteilles (3), comportant au moins un palettiseur (7) et comportant au moins un dispositif (4) collecteur placé en amont, pour prendre en charge les bouteilles (3) vides apportées les unes à la suite des autres en une ou plusieurs files par une machine (36) de fabrication de bouteilles ou un transporteur (8) de bouteilles, un dispositif (24) de transport étant disposé entre le palettiseur (7) et le dispositif (4) collecteur,
**caractérisé en ce que** le dispositif (4) collecteur comporte au moins un dispositif (5) de transfert et un ou plusieurs éléments (6) porteurs intermédiaires pouvant être transportés avec le dispositif (24) de transport et destinés à recevoir par couches (25) les bouteilies (3) vides.

6. Dispositif suivant la revendication 5, **caractérisé en ce qu'**il est prévu, pour le ou les éléments (6) porteurs intermédiaires, un dispositif (24) de transport circulant en navette ou en circuit.

7. Dispositif suivant la revendication 5 ou 6, **caractérisé en ce qu'**il est prévu un magasin (37) pour l'entreposage temporaire d'éléments (6) porteurs intermédiaires remplis et/ou vides.

8. Dispositif suivant l'une des revendications 5 à 7, **caractérisé en ce que** le dispositif (4) collecteur est disposé directement sur la machine (36) de fabrication de bouteilles, notamment sur une machine de soufflage.

9. Dispositif suivant l'une des revendications 5 à 8, **caractérisé en ce que** l'élément (6) porteur intermédiaire en forme de plaque est équipé d'un bord (22) porteur mobile ou d'un guide (21) de bouteilles ayant un coulisseau (43) extérieur.

10. Dispositif suivant l'une des revendications 5 à 9, **caractérisé en ce que** dispositif (5) de transfert et le palettiseur (7) sont constitués sous la forme de robots (11) linéaires à plusieurs axes ayant des traverses (20) et des dispositifs (17,30,31) de préhension pouvant être déplacés ainsi que soulevés et abaissés.

11. Dispositif suivant l'une des revendications 5 à 10, **caractérisé en ce que** le système (1) de traitement de bouteilles comprend plusieurs installations (2) de collecte et de palettisation disposées côté-à-côte et ayant des traverses (20) communes.
